# EUROPÄISCHE PATENTANMELDUNG

(11) **EP 1 193 041 A2**
(43) Veröffentlichungstag der Anmeldung: **03.04.2002**
(21) Anmeldenummer: 01118337.3
(22) Anmeldetag: 27.07.2001
(51) Int. Cl.: B29C 47/00, B29C 47/88, B29C 47/92

(54) **Verfahren und Vorrichtung zur Regelung des Foliendickenprofils in Folienblasanlagen**

(30) Priorität: 27.09.2000 DE 10047836
(71) Anmelder: HOSOKAWA ALPINE Aktiengesellschaft & Co. OHG, 86199 Augsburg (DE)
(72) Erfinder: Mahler, Franz, Dipl.-Ing. (FH), 86169 Augsburg (DE); Baier, Christian, Dipl.-Ing., 86356 Hainhofen (DE); Bayer, Bernd, Dipl.-Ing. (FH), 86450 Altenmünste (DE)
(74) Vertreter: Rapp, Bertram, Dr.

(57) **Zusammenfassung**

Die Erfindung betrifft ein Verfahren und eine Vorrichtung zur Regelung des Foliendickenprofils in Folienblasanlagen im Zuge der Herstellung von Schlauchblasfolien. Die aus dem Stand der Technik bekannten Lösungen zielen stets darauf ab, die gesamte Dicke der Schlauchfolie zu bestimmen und darauf die Regelung des Extrusionsprozesses zu stützen. Mit diesen bekannten Methoden ist die selektive Erfassung einzelner Schichtdicken einer Mehrschichtfolie und optional deren selektive Regelung nicht möglich. Aufgabe der Erfindung ist es ein Verfahren und eine Vorrichtung zur Regelung des Foliendickenprofils in Folienblasanlagen zu schaffen, wobei die Regelung der Foliendicke auf Grundlage der Dickenmessung minuestens einer oder mehrerer einzelner Schichten einer Mehrschichtfolie erfolgt. Die erfindungsgemäßen Lösungen umfassen insbesondere Sensoren (18) zur berührungslosen Messung der verschiedenen Einzelschichtdicken die nach dem Prinzip der Weißlichtinterferometrie arbeiten.

## Beschreibung

Die Erfindung betrifft ein Verfahren und eine Vorrichtung zur Regelung des Foliendickenprofils in Folienblasanlagen im Zuge der Herstellung von Schlauchblasfolien.

Folienblasanlagen bestehen im allgemeinen aus mindestens einem Extruder zum Schmelzen, Mischen, Entgasen und Homogenisieren von Kunststoffgranulat, der an einen Folienblaskopf angeschlossen ist. Der Folienblaskopf dient zur Verteilung der geschmolzenen Kunststoffmasse für einen gleichmäßigen Austritt aus einer Ringdüse am Ausgang des Folienblaskopfes. Bei Koextrusionsanlagen sind mehrere Extruder an einen Koextrusionsblaskopf angeschlossen, wodurch mehrschichtige Folien, z.B. in drei, fünf oder sieben Schichten aus Polyethylen (PE) hoher (HDPE) und niedriger (LDPE) Dichte, Polypropylen (PP), sowie aus weiteren Polymeren oder Polymergemischen in den unterschiedlichsten Kombinationen hergestellt werden können.

Nach dem Austritt der Kunststoffschmelze aus der Ringdüse wird der Folienschlauch in seiner Längsrichtung abgezogen und durch erhöhten Innendruck, aufgrund der in das Innere des Folienschlauches zugeführten Luft, auf den gewünschten Durchmesser aufgeblasen. Ein zwischen Folienblaskopf und der folgenden Flachlegevorrichtung angeordneter Kalibrierkorb stützt und führt den aufgeblasenen Folienschlauch. Der Kalibrierkorb ist in seiner inneren Öffnungsweite verstellbar, so daß er auf die unterschiedlichsten Folienschlauchdurchmesser eingestellt werden kann.

Nach Abkühlen des aufgeblasenen Folienschlauches durch Luftkühlung im Inneren und an der Außenseite des Folienschlauches, wird dieser nach der Flachlegung einer Abzugsvorrichtung zugeführt und anschließend auf einen Folienwickel aufgespult.

Ein wesentliches Qualitätsmerkmal der fertigen Folie ist ihre gleichmäßige Dicke. Eine gleichmäßige Dicke der Folie in Extrusionsrichtung kann ohne wesentliche Schwierigkeiten durch eine konstante Einstellung der Abzugsgeschwindigkeit und der Fördermenge der Kunststoffschmelzen an den Extrudern eingestellt werden. Problematisch ist hingegen die Gleichmäßigkeit der Dickenverteilung über den Umfang des extrudierten Folienschlauches.

### Stand der Technik:

Es sind bereits eine Vielzahl von Verfahren und Vorrichtung bekannt, die sich mit unterschiedlichen Methoden der Regelung der Dickenverteilung des extrudierten Folienschlauches befassen.

So beschreibt z.B. die DE 26 58 518 C2 eine Anlage zur Herstellung von Blasfolien, die eine Meßvorrichtung für die Foliendicke umfasst, welche im Bereich der Aufwickelvorrichtung oder zwischen der Flachlegeeinrichtung und der Aufwickelvorrichtung angeordnet ist und die Dicke der Folie über die Breite des flachgelegten bzw. über den Umfang des aufgeblasenen Folienschlaches mißt. Auf Grundlage des gemessenen Foliendickenprofils werden Abweichungen des Ist-Profils vom vorgegebenen Soll-Profil bestimmt. In Abhängigkeit der Abweichungen erfolgen dann Regeleingriffe in eine Einrichtung zur Beeinflussung der Umfangstemperaturen im Bereich der Schlauchbildungszone, z.B. durch Ansteuern eines segmentierten Außenluftblasringes. Neben der dort beschriebenen Kühlung des Folienschlauches mit Kühlluft in der Schlauchbildungszone, kann der Folienschlauch auch direkt erwärmt werden, so z.B. wie in der DE 195 41 296 A1 offenbart, durch die direkte Erwärmung der Folie mit Ultraschall- oder Mikrowellenheizelementen.

Neben der Temperierung der Folie in der Schlauchbildungszone, ist es beispiesweise auch durch die DE 39 36 239 A1 bekannt, eine Vielzahl von über den Umfang verteilter Heizpatronen anzusteuern, welche innerhalb des Ringdüsenwerkzeuges eingesetzt sind und dadurch die Steuerung der Temperaturverteilung über den Umfang des Schlauches noch innerhalb des Düsenwerkzeuges vornehmen.

In den genannten Fällen dient das segmentweise Kühlen oder Heizen dazu, die Viskosität der Schmelze zu ändern, um damit den Fluß der austretenden Kunststoffschmelze über den Umfang sektorenweise zu beeinflussen.

Neben den Verfahren zum Kühlen und Heizen ist es auch üblich (DE 40 13 610 C2), die Ringspaltdüsenlippe in einem gewissen Maße elastisch verformbar auszubilden, so daß die Ringspaltdicke über den Umfang hinweg durch mechanische Stellelemente segmentweise verändert werden kann, wodurch eine gewisse Dickenfehlerkorrektur ausgeführt werden kann.

All diese Verfahren arbeiten mit einem Sensor, vorzugsweise einem kapazitiv arbeitenden Sensor, der die Foliendicke dadurch bestimmt, daß der Sensor in einer konstanten Höhe um den Folienschlauch rotiert und z.B. in berührendem Kontakt den Folienschlauch abtastet und die Foliendicke über den Umfang bestimmt. Ein solcher rotierender, kapazitiver Sensor ist beispielsweise in der DE 40 36 868 A1 offenbart.

### Nachteile im Stand der Technik, Aufgabe und Lösung der Erfindung:

Die aus dem Stand der Technik bekannten Lösungen zielen stets darauf ab, die gesamte Dicke der Schlauchfolie zu bestimmen und darauf die Regelung des Extrusionsprozesses zu stützen.

In zunehmenden Maße werden jedoch nicht einschichtige Folien, sondern mehrschichtige Folien im Schlauchblasverfahren hergestellt. Mehrschichtige Folien sind erforderlich, um den vielfältigen Anforderungen an die Produkteigenschaften der fertigen Folie gerecht werden zu können. Um die je nach Anwendungsfall gewünschten Anforderungen, beispielsweise an die Bedruckbarkeit, Siegelfähigkeit, Migrations- und Barriereeigenschaften oder die Tiefziehfähigkeit erfüllen zu können, sind Kombinationen von unterschiedlichen Kunststoffmaterialen nötig. Oftmals ist es erforderlich exakt definierte Schichtdicken-Verhältnisse der koextrudierten Kunststoffschichten einzuhalten, um die gewünschten Pordukteigenschaften erhalten zu können.

Auf der anderen Seite kann es aber auch sinnvoll sein, die Dicke nur einer bestimmten Schicht einer koextrudierten Folie festzulegen. So beispielsweise dann, wenn bei einer Dreischichtfolie die Produkteigenschaften im wesentlichen durch die beiden Außenschichten bestimmt werden und die Mittelschicht nur als Füllschicht dient.
Dabei wird z.B. im Hinblick auf die Barriereeigenschaften der Außenschichten eine Mindestschichtdicke vorgegeben, die keinesfalls unterschritten werden darf. Andererseits ist dabei die Dicke der Mittelschicht nicht von Bedeutung für die genannten Eigenschaften.

Mit den aus dem Stand der Technik bekannten Methoden der Erfassung der Dickenverteilung über den Umfang einer Schlauchfolienblase ist die selektive Erfassung einzelner Schichtdicken einer Mehrschichtfolie und optional deren selektive Regelung nicht möglich.

Somit wäre es von Vorteil und es ist die Aufgabe der vorliegenden Erfindung ein Verfahren und eine Vorrichtung zur Regelung des Foliendickenprofils in Folienblasanlagen im Zuge der Herstellung von Schlauchblasfolien zu schaffen, wobei die Regelung der Foliendicke auf Grundlage der Dickenmessung mindestens einer einzelnen Schicht einer Mehrschichtfolie erfolgt. Es ist weiterhin Aufgabe der vorliegenden Erfindung ein Verfahren und eine Vorrichtung zu schaffen, bei der auf Grundlage der Messung einer oder mehrerer einzelner Schichtdicken bei Mehrschichtfolien, entweder die Gesamtdicke der Folie oder die Dicke einzelner Schichten geregelt werden können. Eine zusätzliche Aufgabe der Erfindung ist es auch, einen geeigenten Sensor bereitzustellen, der einzelne Schichtdicken einer Mehrschichtfolie berührungslos messen kann, dies insbesondere außerhalb des Extrusionswerkzeuges im Bereich der Schlauchbildungszone oder vorzugsweise oberhalb der Frostlinie.

Die erfindungsgemäßen Aufgaben werden durch die Verfahren und Vorrichtungen gemäß den Ansprüchen gelöst. Die erfindungsgemäßen Lösungen umfassen insbesondere Sensoren zur berührungslosen Messung der verschiedenen Schichtdicken nach dem Prinzip der Weißlichtinterferometrie.

### Beschreibung der Erfindung:

Bei der erfindungsgemäßen Lösung kommen Sensoren zur Messung der Foliendicke zum Einsatz, die einzelne koextrudierte Folienschichten unterschiedlicher Kunststoffmaterialien messen können. Für die Messung von beispielsweise transparenten Folienschichten sind Sensoren vorteilhaft, die nach dem Prinzip der Weißlichtinterferometrie arbeiten. Diese Sensoren senden Weißlicht auf die zu messende Folie aus. Innerhalb der Folie kommt es zu Teilreflexionen des Weißlichtes an jeder Grenzschicht zwischen zwei bedachbarten Folienschichten. Die reflektierten Lichtstrahlen erzeugen Interferenzmuster, die nach ihrer Auswertung eine Berechnung der einzelnen Schichtdicken ermöglicht. Mit einem derartigen Sensor können Schichtdicken sowohl an bewegten, als auch an schwingenden Folien bestimmt werden. Somit können Blasfolienschläuche trotz ihres dynamischen Verhaltens während des Abziehens der Folienschlauchbahn im Bereich zwischen Ringdüsenwerkzeug und Flachlegung insbesondere berührungslos gemessen werden.

Da es sich um einen optisch arbeitenden Sensor handelt, kann der Sensor vorteilhaft mit Lichtleiterfasern mit der Auswerteinheit verbunden sein. Der kompakte Sensor ist elektrisch passiv und umfasst keine elektronischen Komponenten. Ein weiterer Vorteil dieser Sensoren ist, daß alle gängigen transparenten Kunststoffsorten gemessen werden können. Die Messung kann vorzugsweise an transparenten und teil-transparenten Mehrschichtfolien durchgeführt werden, wobei alle Folienschichten gleichzeitig vermessen werden können.

Zur Messung der einzelnen Schichten von nichttransparenten Mehrschichtfolien, die optisch gänzlich undurchlässig sind, können bevorzugt Ultraschallsensoren eingesetzt werden. Aufgrund der unterschiedlichen Schallgeschwindigkeiten in den verschiedenen Schichten können einzelne Folienschichten gemessen werden. Dazu sendet der Ultraschallsensor gepulste Ultraschallwellen aus, die an den verschiedenen Grenzschichten unterschiedlich reflektiert werden. Die reflektierten Echosignale werden vom Sensor wieder aufgenommen und können in einer Auswerteinheit bearbeitet werden. Die Laufzeitunterschiede der Echosignale dienen als Ausgangsgröße zur Berechnung der einzelnen Schichtdicken.

Die genannten Sensoren können üblicherweise die Dicke nur in einem lokalen Bereich des Folienschlaches messen. Um die Dickenverteilung der einzelnen Schichten über den Umfang des Folienschlauches zu ermitteln, wird der Sensor oder die Sensoren in üblicher Weise um den Folienschlauch rotierend betrieben. Dabei ist der Sensor auf einem Drehgestell montiert, das sich vorzugsweise reversierend um den Folienschlauch dreht. Je nach erforderlicher Auflösung für das Dickenverlaufsprofil und je nach Umlaufgeschwindigkeit des Sensors erfolgen während eines gesamten Umlaufs entsprechend viele Messungen in vorzugsweise konstanten Zeitabständen.

Durch die Erfindung können Dickenverlaufsprofile für jede Einzelschicht gesondert und auch zeitlich simultan ermittelt werden. Die Regelung der Folienblasanlage kann dann auf Grundlage einer einzelnen oder einer bestimmten Auswahl der Einzelschichten oder auf Grundlage aller Einzelschichten erfolgen. Wie im Stand der Technik üblich, wird dazu das gemessene Dickenprofil bzw. die gemessenen Dickenprofile mit den Sollprofil oder den Sollprofilen verglichen und bei Abweichungen angemessene Regeleingriffe in den Folienblasprozess vorgenommen.

Die Beinflussung des Dickenprofils kann dabei wie üblich durch Temperieren, also Kühlen oder Heizen entweder des ausgetretenen Folienschlauches z.B. mit Luft oder durch Temperieren des Ringdüsenwerzeuges z.B. über Heizpatronen im Blaskopf erfolgen. Die Regelung erfolgt vorzugsweise segmentweise über den Umfang des Folienschlauches oder des Blaskopfes. Neben der Beeinflussung des Dickenprofils durch Temperieren kann auch der Austrittsspalt des Ringdüsenwerkzeuges mechanisch verändert werden, um die Dicke des austretenden Folienschlauches über seinen Umfang zu steuern.

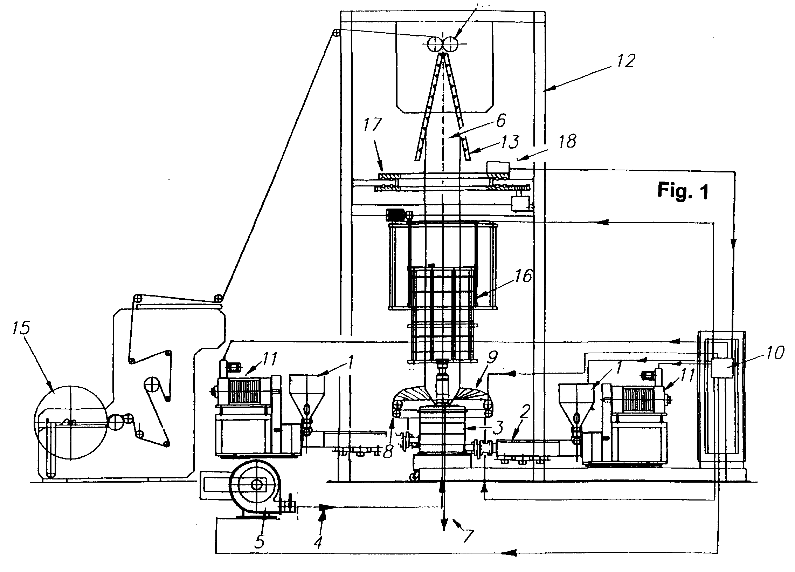

### Erläuterung der Zeichnung:

Ein Ausführungsbeispiel der Erfindung wird nachstehend anhand der einzigen Zeichnung einer Mehrschichtfolienblasanlage in der Seitenansicht näher beschrieben.

### Detailierte Erklärung der Ausführungsform, Beispiel:

Über jeweils eine Dosiervorrichtung (1) wird das zu verarbeitende Kunststoffgranulat für jede Schicht der herzustellenden Mehrschichtfolie in je einen Extruder (2) eingeführt, in diesem aufgeschmolzen, homogenisiert und dem Mehrschichtblaskopf (3) zugeführt. Der Mehrschichtblaskopf (3) weist eine Ringdüse auf, aus der die koextrudierte Kunststoffschmelze austritt. Durch den Mehrschichtblaskopf (3) hindurch erfolgt die Zuleitung von Kühlluft über die Zuluftleitung (4), die über ein Gebläse (5) mit Kühlluft versorgt wird zum Aufblasen des koextrudierten Folienschlauches. Die in der Schlauchblase (6) erwärmte Heißluft wird über die Abluftleitung (7) aus dem Inneren der Schlauchblase herausgeleitet.

Die Anlagensteuerung (10) regelt den gesamten Folienblasvorgang, insbesondere die motorischen Antriebe (11) für die Extruder (2), die Zudosierung des Granulats aus den Dosiervorrichtungen (1), den Hauptkühlluftring (8) und den Segmentkühlluftring (9) in der Nähe der Ringdüse des Mehrschichtblaskopfes (3), sowie die Abzugsgeschwindigkeit des Folienschlauches.

Das Gestell (12) der Folienblasanlage trägt die Flachlegung (13) und die Abzugsvorichtung (14) durch die die Schlauchblase (6) flachgelegt wird und zum Aufwickeln der Folie auf einen Folienwickel (15) weitergeleitet wird. Des weiteren ist am Gestell (12) ein Kalibrierkorb (16) angebracht, der dem gewünschtem Soll-Durchmesser der Schlauchblase (6) angepaßt werden kann. Die Anpassung erfolgt durch ein Öffnen und Schließen des Kalibrierkorbes (16), insbesondere aufgrund eines elektrischen Stellsignals von der Anlagensteuerung (10).

Ein fest mit dem Gestell (12) verbundes Drehgestell (17) trägt den Sensor (18), welcher im Betrieb reversierend um die Schlauchblase (6) rotiert. Die durch den Sensor (18) gemessenen Foliendickenprofile jeder Enzelschicht werden der Anlagensteuerung (10) zugeführt, die nach erfolgtem Soll-/Istvergleich, die Kühlluft am Segmentkühlluftring (9) regelt.

## Patentansprüche

1. Verfahren zur Regelung des Foliendickenprofils in Folienblasanlagen im Zuge der Herstellung von mehrschichtigen Schlauchblasfolien durch Erfassen des Foliendickenprofils über den Umfang des Folienschlauches, anschließendem Vergleichen des erfassten Ist-Profiles mit einem vorgegebenen Soll-Profil, zur Erzeugung einer Regelgröße zum Beeinflussen des Dickenprofils des herzustellenden Folienschlauches **dadurch gekennzeichnet, daß** die Regelgröße auf Grundlage einer Messung einer einzigen oder mehrerer der einzelnen Schichtdicken erzeugt wird.

2. Verfahren nach Anspruch 1, **dadurch gekennzeichnet, daß** die Erfassung des Foliendickenprofils durch einen Sensor nach dem Prinzip der Weißlichtinterferometrie erfolgt.

3. Verfahren nach Anspruch 2, **dadurch gekennzeichnet, daß** der Sensor berührungslos arbeitet.

4. Verfahren nach Anspruch 2 oder 3, **dadurch gekennzeichnet, daß** die Messung außerhalb des Extrusionswerkzeuges am aufgeblasenen Folienschlauch im Bereich der Schlauchbildungszone oder oberhalb der Frostlinie, oder an der flachgelegten Folie erfolgt.

5. Verfahren nach Anspruch 1 bis 4, **dadurch gekennzeichnet, daß** die Beeinflussung des Dickenprofils durch Temperieren des Folienschlauches oder des Ringdüsenwerzeuges erfolgt.

6. Verfahren nach Anspruch 1 bis 4, **dadurch gekennzeichnet, daß** die Beeinflussung des Dickenprofil durch Änderung der Spaltweite des Ringdüsenwerkzeuges erfolgt.

7. Verfahren nach Anspruch 5 oder 6, **dadurch gekennzeichnet, daß** die Beeinflussung segmentweise über den Umfang des Folienschlauches bzw. des Ringdüsenwerzeuges erfolgt.

8. Folienblasanlage zur Herstellung von mehrschichtigen Schlauchblasfolien, mit einem Sensor zur Erfassung des Foliendickenprofils über den Umfang des Folienschlauches, mit einer Auswerteinheit zum Vergleichen eines durch den Sensor ermittelten Ist-Profiles mit einem vorgegebenen Soll-Profil, zur Erzeugung einer Regelgröße und mit einer Einrichtung zum Beeinflussen des Dickenprofils des herzustellenden Folienschlauchs auf Grundlage der Regelgröße **dadurch gekennzeichnet, daß** der Foliendickensensor ein Sensor nach dem Prinzip der Weißlichtinterferometrie ist, zur Messung einer einzigen oder mehrerer der einzelnen Schichtdicken des Folienschlauchs.

9. Folienblasanlage nach Anspruch 8, **dadurch gekennzeichnet, daß** der Sensor berührungslos zur Schlauchfolie angeordnet ist.

10. Folienblasanlage nach Anspruch 8 oder 9, **dadurch gekennzeichnet, daß** der Sensor um die Schlauchfolie rotierend angeordnet ist.

11. Folienblasanlage nach Anspruch 8 bis 10, **dadurch gekennzeichnet, daß** die Einrichtung zum Beeinflussen des Dickenprofils ein Segmentkühlring ist.
